# FASCICULE DE BREVET EUROPEEN

(11) **EP 0 637 532 B1**
(45) Date de publication et mention de la délivrance du brevet: **02.04.1997**
(21) Numéro de dépôt: 94401748.2
(22) Date de dépôt: 28.07.1994
(51) Int. Cl.: B60S 5/00, E04H 6/04, B08B 15/00

(54) **Enceinte pour réparation de carrosserie de véhicule**
Umschliessung zur Reparatur einer Fahrzeugkarosserie
Enclosure for motor vehicle body repairs

(30) Priorité: 05.08.1993 FR 9309678
(43) Date de publication de la demande: 08.02.1995
(73) Titulaire: OMIA, 16710 Saint-Yrieix (FR)
(72) Inventeur: Martin, Guy, F-16600 Magnac Sur Touvre (FR)
(74) Mandataire: Armengaud Ainé, Alain

(56) Documents cités:
- EP-A- 0 352 459
- DE-U- 9 200 568
- FR-A- 2 387 393
- GB-A- 2 218 143
- US-A- 3 807 291
- US-A- 5 010 907

## Description

La présente invention concerne l'industrie en général et également la réparation automobile. Elle vise plus particulièrement un ensemble d'équipements pour effectuer des réparations partielles dans le domaine de la carrosserie automobile. En effet, le type de réparations dans ce secteur d'activité a énormément évolué depuis quelques années.

Ainsi, les chocs sont dans une grande majorité des chocs urbains qui touchent, pour 80 % des cas, les parties avant ou arrière du véhicule, tandis que les chocs latéraux représentent environ 20 % de la totalité. L'Homme de l'Art procède souvent par remplacement des pièces (aile, capot, portière, hayon, coffre) ; ces opérations de remplacement sont de plus en plus rapides et nécessitent un équipement nouveau afin de permettre :
- le démontage des éléments,
- un léger redressage et formage ou remplacement de la pièce,
- une sous-couche de peinture de préparation,
- un passage d'apprêts garnissants,
- le masquage et le ponçage des pièces,
- une couche de peinture de base,
- une couche de vernis de finition,
- le démasquage et le remontage des accessoires.

Or, la législation en vigueur, l'inspection du travail, les normes française et européenne imposent des conditions de protection très draconiennes pour les travailleurs exerçant dans un environnement toxique et particulièrement dans le cas d'enceintes renfermant des peintures, solvants pulvérisés ou de fines particules solides en suspension.

Les enceintes connues, spécialement les cabines à peinture, englobent généralement l'ensemble du véhicule et prennent une surface au sol non négligeable, atteignant couramment la trentaine de mètres carrés, sans compter l'espace que l'on doit réserver à l'ensemble de la machinerie nécessaire à la mise en oeuvre des opérations de réfection dans l'enceinte. Par ailleurs, la puissance électrique installée, pour le respect des débits devant être insufflés dans l'enceinte recevant le véhicule, ainsi que pour le chauffage du volume utile, est non négligeable si l'on considère la portion de surface du véhicule qui subit les opérations de réparation. En effet, actuellement il est obligatoire de mettre le véhicule en entier dans l'enceinte ventilée, étant entendu que l'on protège ainsi l'environnement, par une isolation, des pulvérisations de peinture.

On connaît le brevet US-A-3 807 291 qui décrit une enceinte du genre énoncé dans le préambule de la revendication principale, pour la réparation et l'entretien d'un véhicule, englobant d'une part un véhicule, et d'autre part un ensemble de moyens nécessaires à sa réparation et à son entretien.

La présente invention vise à pallier ces inconvénients : place au sol perdue, consommation d'énergie excessive, en proposant une enceinte de protection qui n'englobe qu'une partie du véhicule lors du traitement des opérations de réfection de la carrosserie.

Selon l'invention, cet ensemble présente des cotes pratiquement de valeur de moitié par rapport à celles des enceintes existantes, il en est de même pour les débits gazeux recirculés dans le volume, ce qui entraîne une diminution très sensible de la consommation énergétique.

Bien entendu, cet ensemble intègre tous les appareillages spécialisés, disposés de manière ergonomique autour du véhicule afin d'optimiser la tâche du travailleur.

A cet effet, l'enceinte pour la réparation d'une portion de véhicule, englobant d'une part, tout ou partie du véhicule, et d'autre part, l'ensemble des moyens nécessaires à la réparation dudit véhicule, ladite enceinte étant munie sur l'un de ses côtés d'au moins une ouverture pour l'introduction dudit véhicule, se caractérise en ce qu'elle comporte une pluralité de panneaux modulaires, formant plafond, bardage, plancher, les panneaux étant solidarisés entre eux de manière à conformer le volume total de l'enceinte, ladite ouverture étant pourvue sur tout ou partie de sa périphérie d'un organe d'étanchéité, qui garantit une section d'ouverture, épouse la forme et les contours d'un véhicule et permet d'utiliser ladite enceinte dans une configuration réduite en volume et en énergie.

D'autres caractéristiques et avantages de la présente invention ressortiront de la description faite ci-après, en référence aux dessins annexés qui en illustrent un exemple de réalisation dépourvu de tout caractère limitatif. Sur les figures :

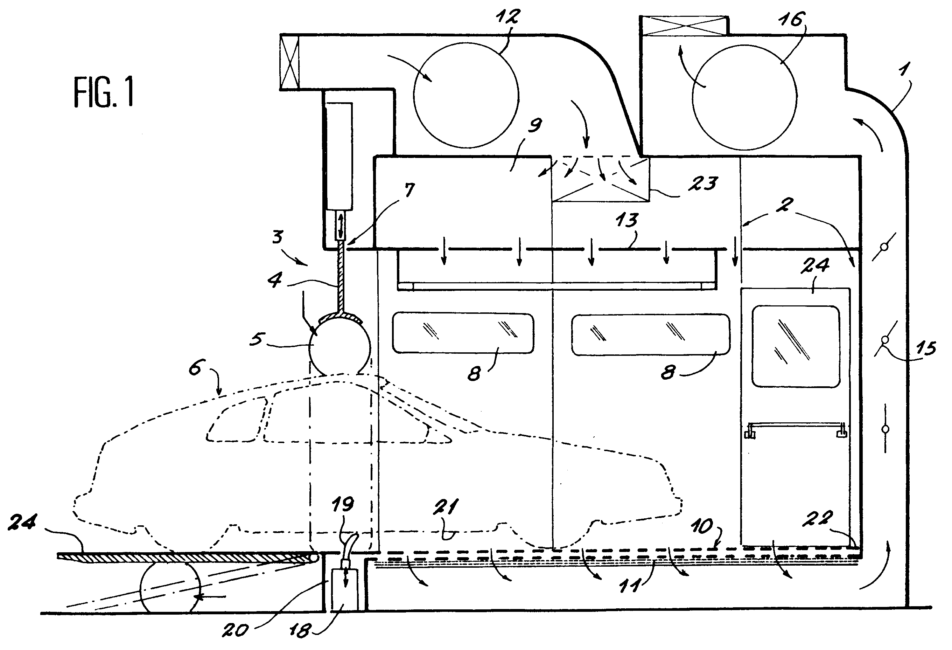

- la figure 1 est une vue plane en coupe, en élévation latérale d'une enceinte selon l'invention ;

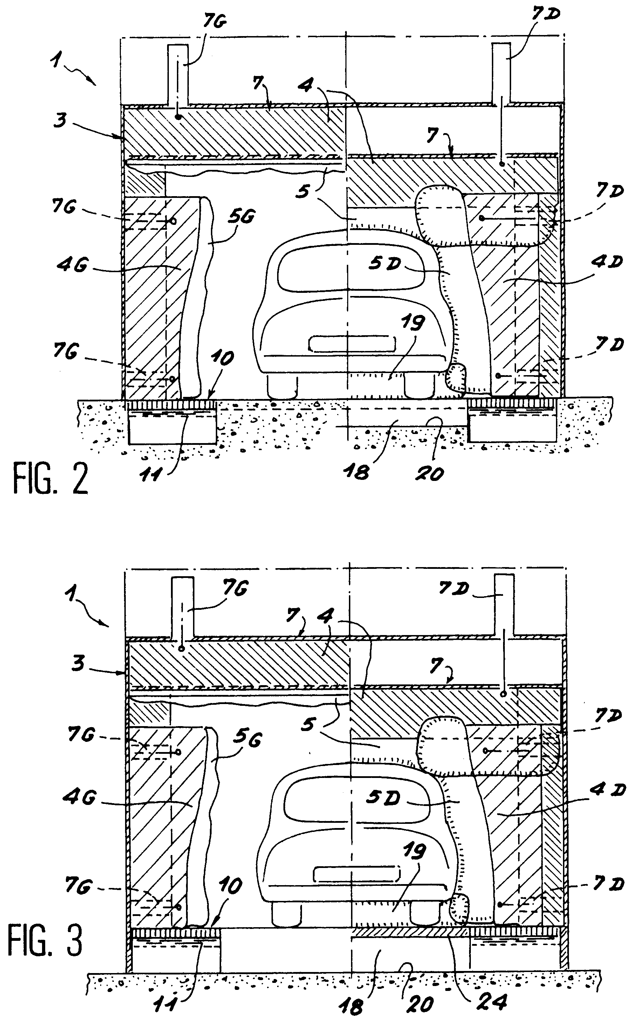

- la figure 2 est une vue plane en coupe, en élévation frontale, d'une enceinte selon l'invention, avec travaux de génie civil ;
- la figure 3 est une vue plane en coupe, en élévation frontale, selon l'invention, ne comportant pas de génie civil mais un châssis de mise à niveau ;

Selon un exemple préféré de réalisation d'une enceinte 1 de réparation partielle de carrosserie d'un véhicule, elle est constituée d'une pluralité de panneaux 2 modulaires notamment reliés entre eux par un système de boulonnage de manière à conformer un volume utile qui s'inscrit notamment dans un carré. L'enceinte 1 présente sur l'un de ses côtés une ouverture 3 afin de permettre l'introduction du véhicule, cette ouverture 3 comprend également sur tout ou partie de sa périphérie un dispositif d'étanchéité 4, notamment en U et en plusieurs parties 4G, 4D, de manière à être en conformité avec les obligations légales. Ce dispositif d'étanchéité 4, 4G, 4D, notamment réalisé sous la forme d'un joint 5, 5G, 5D gonflable garantit une section d'ouverture similaire à la section droite de la voiture 6. Cette conception permet de venir épouser la forme et les contours du véhicule, bien entendu, le matériau constitutif du joint d'étanchéité n'agresse et ne détériore pas la surface du véhicule qui lui est opposée.

Le dispositif d'étanchéité 4, 4G, 4D est monté sur des panneaux rétractables 7, 7G, 7D, actionnés par tout moyen connu tel que des vérins pneumatiques ou hydrauliques et coopérant avec la périphérie de ladite ouverture 3.

On prévoit également de disposer sur les panneaux 2 conformant le bardage de l'enceinte, ou le plafond des moyens d'éclairage 8 directs ou indirects, artificiels ou naturels (hublots, portes de sécurité) ; on dispose préférentiellement dans le plafond les systèmes de filtration 9 d'air tandis qu' au niveau du sol, réalisé sous la forme d'un caillebotis 10, on étend dans des paniers des filtres 11 à particules solides.

L'air prélevé à l'extérieur de l'enceinte par une batterie de ventilateurs 12 est insufflé par au moins une bouche 13 dans le volume utile, il chemine si besoin au travers d'une chambre de répartition 14 assurant une préfiltration mécanique. Le flux gazeux est distillé au travers d'un système de filtration entre la chambre 14 et l'enceinte 1 et repris en partie basse de l'enceinte 1 à la suite d'un écoulement vertical en aval des paniers 11 contenant les filtres à particules solides.

L'air dépollué est ensuite évacué vers l'extérieur par l'intermédiaire d'une gaine pourvue d'au moins un organe de réglage 15 notamment réalisé sous la forme d'un diaphragme réglable afin de pouvoir limiter la vitesse de sortie du fluide. On dispose également, sur le réseau de sortie d'air, une batterie de ventilateurs 16 d'extractions similaires à ceux constituant la batterie de ventilateurs de pulsion.

Le système de ventilation d'extraction ou de pulsion est conçu de manière à couvrir les plages de débit d'air que l'on utilise en phase de peinture ou de séchage et quelque soit le type de peinture déposée (peinture à solvant ou peinture à l'eau).

Selon une autre caractéristique de l'invention, on prévoit de disposer l'enceinte 1 sur le sol ou sur un soubassement. Dans le premier exemple de réalisation, on procède à des travaux de génie civil en souterrain afin de disposer des gaines d'extraction d'air, permettant de récupérer dans une fosse l'air sous les caillebotis 10 et les paniers munis de filtres 11. On pourvoit éventuellement cette enceinte 1 d'un pont élévateur 17, afin que l'utilisateur puisse travailler de manière ergonomique.

Dans le deuxième exemple de réalisation, l'enceinte est munie d'un châssis, notamment métallique, pourvu éventuellement d'une rampe d'accès 24, permettant de placer horizontalement le véhicule après relevage de la rampe.

Quel que soit le mode de réalisation, l'enceinte comporte un système d'étanchéité 18, notamment réalisé sous la forme d'une lame souple 19, rétractable dans une alvéole 20 par tout système connu (vérins hydrauliques ou pneumatiques) dans le soubassement garantissant l'étanchéité de l'espace compris entre le plancher du véhicule 21 et ledit soubassement 22.

On ménage également dans l'enceinte 1 ou dans les conduits de ventilation de moyens de chauffage 23 notamment convectifs ou radiatifs, utilisés seuls ou en combinaison, réalisés notamment sous la forme d'au moins un bras muni à l'une de ces extrémités d'un émetteur d'ondes électromagnétiques de fréquence variable mais préférentiellement infrarouges ou de résistances chauffantes placées dans les gaines d'air. Ce mode de chauffage assure le respect des conditions d'application des diverses peintures et principalement, le respect du temps de séchage à une température et à un titre hygrométrique donnés.

L'invention, telle qu'elle vient d'être décrite permet le traitement de l'ensemble des travaux de réparation de carrosserie sur un véhicule, sans être obligés de changer de place ledit véhicule et surtout sans avoir l'obligation de l'usage d'une cabine de peinture traditionnelle.

Ainsi, l'utilisation d'un petit pont élévateur 17 garantit des travaux de démontage, de redressage, de remontage à hauteur d'homme, augmentant ainsi le rendement des opérateurs. Pendant la phase d'utilisation de l'élévateur 17, les batteries de ventilateurs 12, 16 ne sont pas mises en marche, tandis qu'en phase de peinture, le dispositif d'étanchéité 4, 18 et la ventilation actionnés permettent le respect de conditions de travail optimum, les solvants et les particules solides étant piégés dans les divers filtres 9, 11.

En phase de séchage, on utilise tout ou partie des divers moyens de chauffage tout en maintenant si besoin les diverses batteries de ventilateurs en état de marche.

Cette enceinte modulable garantit à l'utilisateur des temps d'intervention les plus courts possible, pour un coût énergétique raisonnable et lui permet d'augmenter ces capacités de prestation de service vis-à-vis d'une clientèle à dominante urbaine.

Il demeure bien entendu que la présente invention n'est pas limitée aux exemples de réalisation décrits et représentés ci-dessus, mais qu'elle en englobe toutes les variantes.

## Revendications

1. Enceinte (1) pour la réparation d'une portion de véhicule (6), englobant d'une part, tout ou partie du véhicule, et d'autre part, l'ensemble des moyens nécessaires à la réparation dudit véhicule, ladite enceinte étant munie sur l'un de ses côtés d'au moins une ouverture (3) pour l'introduction dudit véhicule (6), caractérisée en ce qu'elle comporte une pluralité de panneaux (2) modulaires, formant plafond, bardage, plancher, les panneaux étant solidarisés entre eux de manière à conformer le volume total de l'enceinte, ladite ouverture étant pourvue sur tout ou partie de sa périphérie d'un organe d'étanchéité (4, 4G, 4D), qui garantit une section d'ouverture, épouse la forme et les contours d'un véhicule et permet d'utiliser ladite enceinte dans une configuration réduite en volume et en énergie.

2. Enceinte pour la réparation de véhicule selon la revendication 1, caractérisée en ce que l'organe d'étanchéité (4, 4G, 4D) est notamment réalisé sous la forme d'un joint gonflable (5, 5G, 5D) en U, garantissant une section d'ouverture qui épouse la section droite du véhicule (6).

3. Enceinte pour la réparation de véhicule selon la revendication 1 ou 2, caractérisée en ce que l'organe d'étanchéité (4, 4G, 4D) est monté sur des panneaux rétractables (7, 7G, 7D) actionnés par tout moyen connu tel que des vérins pneumatiques ou hydrauliques et coopérant avec la périphérie de ladite ouverture (3).

4. Enceinte pour la réparation de véhicule selon l'une quelconque des revendications précédentes, caractérisée en ce que l'on dispose au sein des panneaux (2) conformant notamment le bardage, les moyens d'éclairage (8) et au sein des panneaux (2) conformant notamment le plafond, les systèmes de filtration d'air (9) et l'on pourvoit, au niveau du sol, des paniers (11) à filtre de particules solides.

5. Enceinte de réparation de véhicule selon l'une quelconque des revendications précédentes, caractérisée en ce que l'on équipe l'enceinte (1) de réparation d'une batterie de ventilateurs d'extraction (16) et de pulsion (12), dont le débit d'air véhiculé peut être modifié par des moyens de réglage (15) et de bifurcation disposés sur les gaines d'extraction ou d'amenée d'air.

6. Enceinte de réparation pour la réparation de véhicule selon l'une quelconque des revendications précédentes, caractérisée en ce que l'on dispose au niveau du sol de l'enceinte (1), d'un châssis pourvu d'une rampe d'accès (24), ou d'un pont élévateur (17), permettant à l'utilisateur de travailler dans de bonnes conditions d'ergonomie.

7. Enceinte de réparation pour la réparation de véhicule selon l'une quelconque des revendications précédentes, caractérisée en ce que l'on dispose dans le soubassement de l'enceinte d'un système d'étanchéité (18), notamment réalisé sous la forme d'une lame souple (19), rétractable dans une alvéole (20) par un système de vérin pneumatique ou hydraulique, garantissant l'étanchéité de l'espace compris entre le plancher (21) du véhicule et ledit soubassement (22).

8. Enceinte de réparation pour la réparation de véhicule selon l'une quelconque des revendications précédentes, caractérisée en ce que l'on dispose dans les conduits de ventilation, ou dans l'enceinte de moyens de chauffage (23) convectifs ou radiatifs, utilisés seuls ou en combinaison en fonction des conditions d'application des diverses peintures, et réalisés sous la forme de résistances électriques ou d'émetteurs d'ondes électro-magnétiques de fréquence variable.

## Claims

1. Enclosure (1) for the repair of a vehicle portion (6), enclosing, on the one hand, all or a part of the vehicle and, on the other hand, the assembly of the means necessary for the repair of said vehicle, said enclosure being equipped, at one of its sides, with at least one opening (3) for the introduction of said vehicle (6), characterized in that it comprises a plurality of modular panels (2), forming ceiling, walling, floor, the panels being secured to one another so as to form the total volume of the enclosure, said opening being provided, over all or a part of its periphery, with a sealing member (4, 4G, 4D) which assures an opening cross-section, hugs the shape and contours of a vehicle and enables said enclosure to be used in a configuration reduced in volume and in energy.

2. Enclosure for vehicle repair according to claim 1, characterized in that the sealing member (4, 4G, 4D) is realized, notably, in the form of a U-shaped inflatable seal (5, 5G, 5D), assuring an opening cross-section which hugs the cross-section of the vehicle (6).

3. Enclosure for vehicle repair according to claim 1 or 2, characterized in that the sealing member (4, 4G, 4D) is mounted on retractable panels (7, 7G, 7D) actuated by any known means such as pneumatic or hydraulic jacks and cooperating with the periphery of said opening (3).

4. Enclosure for vehicle repair according to any one of the preceding claims, characterized in that within the panels (2) forming, notably, the walling, there are disposed illumination means (8) and, within the panels (2) forming, notably, the ceiling, the air filtration systems (9) and that filter baskets (11) for solid particles are provided at the level of the floor.

5. Enclosure for vehicle repair according to any one of the preceding claims, characterized in that the repair enclosure (1) is equipped with a battery of extraction fans (16) and input fans (12), the air flow rate of which may be modified by regulating and branching means (15) disposed on the extraction or intake air ducts.

6. Repair enclosure for vehicle repair according to any one of the preceding claims, characterized in that there is available, at the level of the floor of the enclosure (1), a chassis provided with an access ramp (24) or with an elevator bridge (17), allowing the user to work in good ergonomic conditions.

7. Repair enclosure for vehicle repair according to any one of the preceding claims, characterized in that there is available, in the under-frame of the enclosure, a sealing system (18), notably constructed in the form of a flexible blade (19) retractable into a cavity (20) by a pneumatic or hydraulic jack system, assuring the sealing of the space contained between the floor (21) of the vehicle and said under-frame (22).

8. Repair enclosure for vehicle repair according to any one of the preceding claims, characterized in that there are available, in the ventilation ducts or in the enclosure, convection or radiation heating means (23), used alone or in combination as a function of the conditions of use of the various paints, and constructed in the form of electrical resistors or electromagnetic wave emitters of variable frequency.

## Patentansprüche

1. Kabine (1) für die Reparatur eines Teils eines Fahrzeugs (6), die einerseits das Fahrzeug ganz oder teilweise und andererseits für die Reparatur des Fahrzeugs erforderliche Mittel aufnimmt, wobei die Kabine auf einer Seite mit mindestens einer Öffnung (3) für das Hineinfahren dieses Fahrzeugs (6) versehen ist, **dadurch gekennzeichnet**, **daß** sie eine Vielzahl modularer Paneele (2) umfaßt, aus denen Decke, Wände und Boden bestehen, wobei diese Paneele derart untereinander verbunden sind, daß sie den gesamten Rauminhalt der Kabine bilden und die Öffnung über deren Umfang vollständig oder teilweise mit einer Abdichtungseinrichtung (4, 4G, 4D) versehen ist, welche einen Öffnungsquerschnitt sicherstellt, der sich an die Form und Konturen des Fahrzeugs anschmiegt und es erlaubt, die Kabine in einer raum- und energiesparenden Ausführung einzusetzen.

2. Kabine für die Reparatur eines Fahrzeugs nach Anspruch 1, **dadurch gekennzeichnet**, **daß** die Abdichtungseinrichtung (4, 4G, 4D) insbesondere in Gestalt einer U-förmigen aufblasbaren Dichtung (5, 5G, 5D) ausgeführt ist, welche einen Öffnungsquerschnitt sicherstellt, der sich an den Querschnitt des Fahrzeugs (6) anschmiegt.

3. Kabine für die Reparatur eines Fahrzeugs nach Anspruch 1 oder 2, **dadurch gekennzeichnet**, **daß** die Andichtungseinrichtung (4, 4G, 4D) auf einziehbaren Paneelen (7, 7G, 7D) angebracht ist, die von einem beliebigen bekannten Mittel wie Pneumatik- oder Hydraulikzylindern betätigt werden und mit dem Umfang der Öffnung (3) zusammenwirken.

4. Kabine für die Reparatur eines Fahrzeugs nach einem der vorhergehenden Ansprüche, **dadurch gekennzeichnet**, **daß** in den Paneelen (2), welche insbesondere die Wände bilden, Beleuchtungsmittel (8) und in den Paneelen (2), welche insbesondere die Decke bilden, Luftfiltersysteme (9) angeordnet und in Bodenhohe Filterkasetten (11) für feste Teilchen vorgesehen werden.

5. Kabine für die Reparatur eines Fahrzeugs nach einem der vorhergehenden Ansprüche, **dadurch gekennzeichnet**, **daß** die Reparaturkabine (1) mit einem Satz von Saug- (16) und Drucklüftern (12) ausgerüstet ist, deren Luftdurchsatz durch Regelungs- (15) und Teilungsmittel verändert werden kann, die in den Luftabsaug- oder -zufuhrkanälen angeordnet sind.

6. Reparaturkabine für die Reparatur eines Fahrzeugs nach einem der vorhergehenden Ansprüche, **dadurch gekennzeichnet**, **daß** in Bodenhöhe der Kabine (1) ein mit einer Zufahrtsrampe (24) oder Hebebühne (17) versehenes Untergestell angeordnet wird, das es der Arbeitskraft ermöglicht, unter günstigen ergonomischen Bedingungen zu arbeiten.

7. Reparaturkabine für die Reparatur eines Fahrzeugs nach einem der vorhergehenden Ansprüche, **dadurch gekennzeichnet**, **daß** im Unterbau der Kabine ein Abdichtsystem (18) angeordnet ist, das die Abdichtung des Zwischenraums zwischen dem Fahrzeugboden (21) und dem Unterbau (22) sicherstellt, insbesondere als nachgiebige Schürze (19) ausgeführt und durch ein pneumatisches oder hydraulisches Zylindersystem in eine Grube (20) versenkbar ist.

8. Reparaturkabine für die Reparatur eines Fahrzeugs nach einem der vorhergehenden Ansprüche, **dadurch gekennzeichnet**, **daß** man in den Lüftungskanälen oder in der Kabine mit Konvektion oder Strahlung arbeitende Beheizungsmittel (23) anordnet, die abhängig von den Verarbeitungsbedingungen der verschiedenen Anstrichstoffe einzeln oder kombiniert eingesetzt werden und als elektrische Heizwiderstände oder elektromagnetische Strahler mit veränderlicher Frequenz ausgeführt sind.
